# EUROPEAN PATENT APPLICATION

(11) **EP 4 745 220 A1**
(43) Date of publication of application: **20.05.2026**
(21) Application number: 25214786.3
(22) Date of filing: 11.11.2025
(51) Int. Cl.: C12G 1/08, C12G 1/14, C12H 1/06, C12H 1/22

(54) **METHOD FOR PRODUCING SPARKLING WINE**

(30) Priority: 14.11.2024 IT 202400025680
(71) Applicant: Boranga, Giovanni, 37121 Verona (IT)
(72) Inventor: Boranga, Giovanni, 37121 Verona (IT)
(74) Representative: Feltrinelli, Secondo Andrea

(57) **Abstract**

The present invention relates to the wine sector and, in particular, concerns a method for producing sparkling wine.

## Description

### TECHNICAL FIELD OF THE INVENTION

The present invention relates to the wine sector and, in particular, concerns a method for producing sparkling wine.

### STATE OF THE PRIOR ART

In recent decades, sparkling wine production has experienced significant growth globally, transforming it into one of the most popular wine categories among consumers. This expansion has led to the ageing of sophisticated production techniques, including the Classic Method (also known as the Champenoise Method) and the Martinotti Method (also known as the Charmat Method). While both methods share the common goal of producing high-quality sparkling wines, they adopt distinct technical approaches that influence the organoleptic profile, the production process, and, ultimately, the consumer experience.

The Classic Method has ancient origins. The management of refermentation is an ancient French Benedictine skill, developed first at the Abbaye de St. Hilaire in Limoux in Occitania and a century later at the Abbaye de St. Pierre de Hautviller in Champagne.

This method is distinguished by its refermentation, also called "*prise de mousse*", in the bottle. This process involves the primary fermentation of the base wine followed by the addition of a mixture of sugar and yeast (also called "*liqueur de tirage*"), which induces a second fermentation or refermentation directly in the bottle. This step is crucial because it determines the formation of the characteristic bubbles. The wine is then left to age on the lees (also called "*sur lies* ageing") for a period that can vary from several months to several years, contributing to the aromatic complexity and structure of the final product.

Disgorgement (also called "*dégorgement*") is the final step, in which the sediment is removed and the wine is dosed through a mixture (also called "*liqueur d'expedition*") before being corked and packaged for sale.

In general, therefore, the Classic Method is appreciated for its ability to develop wines of great finesse, with a complex aromatic bouquet and a fine, persistent head.

The Martinotti Method, named after its inventor Federico Martinotti, also known incorrectly as the French winemaker Eugène Charmat, who greatly improved the efficiency of the autoclave, is distinguished by the refermentation, or second fermentation, which takes place in large autoclaves rather than in the bottle. This method, introduced in the late 19th century, requires the base wine to undergo a second fermentation in a pressurized tank, now typically made of stainless steel, to which sugar and yeast are added. The process is generally quicker than the Classic Method, taking from a few weeks to a few months, depending on the desired product. The Martinotti Method is particularly appreciated for producing fresh, fruity sparkling wines, with larger bubbles and a less persistent head than wines made with the Classic Method. This method is often used to produce aromatic sparkling wines such as Prosecco, which enhance the fruity and floral notes of the grape varieties used.

In general, the main disadvantages of the Classic Method compared to the Martinotti Method are the cost and complexity of the production process. In this regard, the Classic Method requires significantly more labor and management than the Martinotti Method, since each bottle must be handled multiple times during the production process. Furthermore, the Classic Method presents significantly greater production risks, as the refermentation in the bottle entails greater risks than the refermentation in the autoclave of the Martinotti Method. These risks include, for example, potential problems with pressure management and defective bottles, which could potentially lead to product losses. This also applies to the winemaker's lack of overall control over the production process and the quality of the wine, as each bottle can be different from the others.

In this context, malolactic fermentation (MLF), the biological process in which malic acid, naturally present in wine, is converted into lactic acid by lactic acid bacteria, can reduce the overall acidity of the wine, making it smoother and less harsh. It may also introduce secondary aromas, such as notes of butter, cream, and hazelnut, which are unsuitable for the natural freshness of the aromas and flavors of quality sparkling wines.

In fact, if the producer wishes to produce a sparkling wine with lively acidity and pronounced freshness, malolactic fermentation should be avoided, as malic acid itself contributes to the wine's sensation of freshness and liveliness. Furthermore, preventing malolactic fermentation allows the grape variety's primary aromas, such as fruity and floral notes, to be preserved.

Regarding this last aspect, malolactic fermentation cannot be controlled in any way in the bottle. For this reason, many Champagne producers, but only for their more commercial products, often perform malolactic fermentation before the second fermentation of the base wine in the bottle, which significantly impacts the quality of the wine.

However, the Martinotti Method, with its more rapid refermentation in an autoclave and subsequent bottling for sale, does not allow for the same extent of yeast lysis as the Classic Method, resulting in a generally much less complex and simpler aromatic profile, predominantly dominated by fruity and floral primary aromas.

In this regard, the autoclave is ideal for testing and monitoring refermentation step by step, but due to its high costs, it is disadvantageous for aging on the lees or *sur lies.*

Documents EP4144825A1 and US2014134291A1 describe solutions according to the state of the prior art.

Given the above, it is therefore necessary and advantageous to design and implement a new sparkling wine production method that overcomes the disadvantages of the prior art listed above.

### OBJECTS OF THE INVENTION

The technical task of the present invention is therefore to improve the state of the art in the winemaking sector, particularly with regard to sparkling wine production methods.

A first object of the present invention is to provide a method for producing sparkling wine in which the resulting wine has high organoleptic characteristics, if desired, the highest possible.

A second object of the present invention is to develop a method for producing sparkling wine in which yeast lysis can occur in suitable, simple, and inexpensive tanks with a capacity much larger than that of a bottle and under conditions of absolute operational safety, while simultaneously allowing complete control of the process, both during refermentation or second fermentation and during aging on the lees or *sur lies.*

A third object of the present invention is to provide a method for producing sparkling wine in which malolactic fermentation can be safely excluded during and after refermentation of the base wine.

A fourth object of the present invention is to provide a method for producing sparkling wine that allows for rapid release of the autoclave following refermentation while maintaining industrial-scale production of sparkling wine without the use of bottles for aging on the lees.

A fifth object of the present invention is to provide a method for producing sparkling wine that allows for clarifying the aged sparkling wine and preserving the effects of aging on the lees or *sur lies* carried out in the aging tanks.

This aim and these objectives are achieved by a method for producing sparkling wine according to claim 1.

The dependent claims refer to preferred and advantageous embodiments of the invention.

### BRIEF DESCRIPTION OF THE DRAWINGS

Other features and advantages of the invention will be more clearly illustrated by the description of an embodiment of a method for producing sparkling wine, illustrated by way of example in the accompanying drawings, in which:

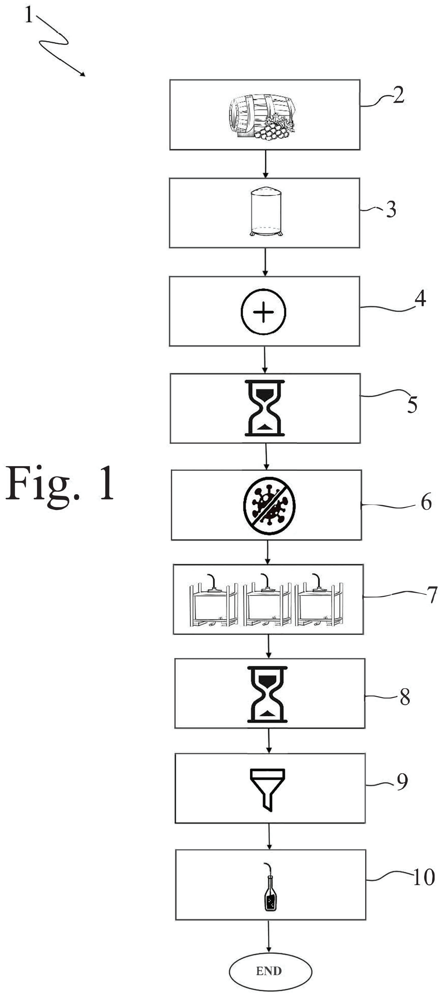

- figure 1 is a block diagram of a method for producing sparkling wine according to an embodiment of the present invention,
- figure 2 illustrates a perspective view of a non-limiting embodiment of a ageing tank usable in the method according to the present invention,
- figure 3 illustrates a perspective view of a set of ageing tanks according to the example in figure 2, stacked vertically and usable in the method according to the present invention.

In the accompanying drawings, identical parts or components are identified by the same reference numbers or letters.

### EMBODIMENTS OF THE INVENTION

With reference to the attached figures, reference number 1 indicates a method for producing sparkling wine according to a non-limiting embodiment of the present invention.

The method according to the present invention is particularly suitable for producing medium, high, and very high-quality sparkling wines.

The method 1 according to the present invention initially comprises the step of preparing and/or supplying a base wine.

By "base wine" it is intended the still, i.e., non-sparkling, wine obtained or supplied for subsequent sparkling wine production.

It should be noted that the aforementioned base wine may also comprise or consist of multiple base wines assembled together, also called *cuvée.*

In particular, the base wine may be prepared and then used to carry out the other steps required by the method according to the present invention, or it may be supplied ready for decanting or introduction in autoclave.

In the case of preparing the base wine, a step of selecting the grapes may be provided, preferably white varieties but optionally also red ones, for example for the production of *blanc de rouge,* or black ones, for example for the production of *blanc de noir,* or a combination of white and red varieties, and, if desired, a step of ripening thereof, since the grapes are typically harvested earlier than in traditional harvesting in order to obtain higher acidity and a moderate sugar content, ideal for sparkling-wine production.

Next, a step of pressing the grapes and a step of separating the musts from the skins and seeds of the grapes may be provided.

Subsequently, a step of first fermentation or alcoholic fermentation may be included, in which the must is made to ferment at a controlled temperature, for example comprised between 15 °C and 20 °C, to preserve the fruity and fresh aromas, if desired for a time comprised between 5 days and 15 days.

After the first fermentation or alcoholic fermentation, the wine may be clarified, in order to remove suspended particles, and optionally stabilized, for example by cold treatment, to prevent future tartrate precipitations.

Finally, the preparation step may optionally comprise a step of assembling different batches of base wine to obtain a desired aromatic profile. The base wine thus obtained is also called *cuvée.*

The method according to the present invention then comprises a step of decanting the base wine into an autoclave.

The autoclave is generally a pressure tank, nowadays almost always made of stainless steel, typically of cylindrical shape, designed to withstand the pressure generated by the refermentation, i.e., the second fermentation, of the base wine.

Clearly, the autoclave is provided with suitable taps for sampling both for tasting and for laboratory checks.

Advantageously, the autoclave is provided with safety valves, pressure gauges for monitoring the pressure, and systems for controlling the temperature.

Typically, the autoclave also comprises at least one agitation system configured to keep the yeasts in suspension, promoting a uniform refermentation, and, if desired, also a system for heating or cooling the mass of the base wine and/or the sparkling wine.

The method according to the present invention then comprises a step of adding a mixture of sugar and yeasts to the base wine in order to trigger the refermentation, i.e., the second fermentation, of the base wine in the autoclave. The above-mentioned mixture of sugar and yeasts is also called *liqueur de tirage.*

It should be noted that step 4 of adding the *liqueur de tirage* may occur shortly before the base wine is actually decanted into the autoclave or directly in the autoclave after the base wine has been decanted in the latter. It should be noted that the refermentation, i.e., the second fermentation, must take place in the autoclave. Therefore, if the *liqueur de tirage* is added before decanting the base wine into the autoclave, this decanting must be carried out quickly, ensuring good ventilation to encourage the yeasts in the *liqueur de tirage* to multiply.

In essence, according to the present invention, refermentation or second fermentation may best occur in an autoclave, since all physical, oenochemical, microbiological, and organoleptic controls are possible at any time.

Clearly, the amount of *liqueur de tirage* added will depend on the amount of base wine used.

The *liqueur de tirage* may consist of a mixture containing, for example, sugar, preferably cane or beet sugar, yeasts, and possibly mineral and/or nitrogenous substances.

If present, mineral substances may include ammonium salts, which help promote yeast growth. Other substances may also be added to the *liqueur de tirage* to facilitate the compaction of the lees and/or sediment and/or solid yeast residues during subsequent production steps.

Then, the method according to the present invention comprises a step of waiting for the end of the refermentation of the base wine in order to obtain a sparkling wine.

Such waiting step may last some tens of days or more, for example about 10 or 20 days or more, this depending on the type of sparkling wine that is desired to be obtained, depending on the refermentation temperature, on the amount of sugar and yeasts used and/or on the size of the autoclave. In any case, the refermentation or second fermentation shuts down with the passing of time and most of the yeasts die.

In general, short refermentations, for example comprised between 15 and 30 days, are typical of the production of light and fresh sparkling wines, whereas slightly longer refermentations are typical of sparkling wines of greater complexity and structure. It is the subsequent *sur lies* ageing, as will be seen in detail below, that allows the sparkling wine to develop greater aromatic complexity and a more refined texture.

It should be considered that, after the refermentation or second fermentation the yeasts that generated it are for the most part already dead. Those still alive, already weakened, are found in a medium, i.e., the sparkling wine, which is entirely hostile to their activity and survival.

In fact, such an environment, decidedly alcoholic, with more than 3 atm of pressure, devoid of oxygen and of sugars, prevents the many yeasts still alive from breathing and creating biological energy and is moreover lacking in growth substances.

It is nonetheless useful to complete the devitalization, as for example illustrated further below.

With reference, instead, to malolactic bacteria, by their nature they rarely become active at the end of the refermentation or second fermentation. However, when it happens that they do become active, the organoleptic damage is severe.

For this reason, the method then includes a devitalization and/or inactivation step 6, in an autoclave, of the malolactic bacterial flora and the still-living yeasts from the refermentation or second fermentation of the sparkling wine.

Preferably, in this step 6, the malolactic bacterial flora is devitalized and/or inactivated completely or, in any case, to a percentage greater than 95%, 97%, or 99%.

This step, which is carried out in an autoclave, allows total control by the oenologist over the effective devitalization and/or partial or total inactivation of the malolactic bacteria and of the yeasts.

As can be understood, the oenologist, for example by sampling wine or by other analogous techniques, which in an autoclave are very simple, can control step by step and verify with certainty the occurrence or not of the devitalization and/or, if desired, partial inactivation of the malolactic bacterial flora and/or of the yeasts, so as to proceed with the subsequent steps of the production method only once the harmlessness of such bacteria has been ascertained.

It should be noted that this devitalization and/or inactivation is performed after the refermentation, i.e., the second fermentation, of the base wine.

Preferably, the devitalization and/or inactivation step 6 occurs by applying and maintaining, in the autoclave, a thermal stress or shock to the sparkling wine for a given period of time or by adding a given quantity of at least one antimicrobial or bactericidal agent to the sparkling wine.

As regards the possible thermal stress or shock, this serves, in fact, to complete the partial natural devitalization and/or inactivation of the malolactic bacterial flora and of the yeasts of the refermentation or second fermentation.

With reference, instead, to the at least one antimicrobial or bactericidal agent, it may comprise or consist of lysozyme.

In the case of application and maintenance of a thermal stress or shock to the sparkling wine, the introduction of one or more successive amounts of sulphur dioxide is preferably provided, for example molecular sulphur dioxide. The introduction of one or more successive amounts of sulphur dioxide makes it possible to exploit the so-called "*shock effect*" to devitalize and/or inactivate the malolactic bacteria and the yeasts of the refermentation or second fermentation that are still alive.

Advantageously, such an amount of sulfur dioxide is comprised between 15 mg/L and 35 mg/L, for example about 20 or 25 mg/L.

Preferably, the thermal stress or shock applied to the sparkling wine, if provided, comprises or consists in heating the sparkling wine to a temperature greater than 35°C, for example greater than 37°C or 40°C. Such temperature may be set and decided by the winemaker as a function of the type of yeasts used for the refermentation or second fermentation.

In this regard, by taking samples and subsequently checking them in the laboratory, a procedure that is easily carried out thanks to the presence of the autoclave, it is possible to decide when the devitalisation and/or inactivation operation has been concluded.

Optionally, the period of time during which the thermal stress or shock is maintained, if provided, may vary depending on the type of yeasts used for the refermentation or second fermentation.

Following the devitalization and/or inactivation step, the method comprises a step of isobaric decanting the sparkling wine with the yeasts of the second fermentation and with the malolactic bacterial flora, preferably completely devitalized and/or inactivated, into ageing tanks having a capacity greater than or equal to 100 liters and provided with an internal surface, or surface configured, during use, to come into contact with the sparkling wine, having a roughness Ra less than or equal to 0.8 µm.

Preferably, the ageing tanks have a capacity greater than or equal to 380 liters, even more preferably greater than or equal to 760 liters, or, if desired, greater than or equal to 1000 liters.

Preferably, the roughness Ra of the internal surface, or of the surface configured, during use, to come into contact with the sparkling wine, is less than or equal to 0.4 µm or 0.2 µm, even more preferably less than or equal to 0.1 µm or 0.05 µm.

Essentially, preferably, the internal surface, or the surface configured, during use, to come into contact with the sparkling wine, is vitrified, that is to say it has a roughness Ra equivalent or comparable to that of glass, so as to maintain the carbon dioxide dissolved in the sparkling wine in the liquid state, as well as to facilitate the possible cleaning of the ageing tank itself.

If desired, the ageing tanks 20 may have a cylindrical, elliptical or parallelepiped configuration, for example with a square or rectangular cross-section, optionally with rounded corners.

Advantageously, the ageing tanks 20, having to undergo an isobaric decanting and an isobaric emptying, respectively in the step of isobaric decanting and in the step of bottling 10, are configured to withstand pressures greater than at least 8 atm, optionally greater than 10 atm or 12 atm.

Preferably, the ageing tanks 20 are made of metal, for example iron or steel, optionally stainless steel, possibly AISI 304 or AISI 316, if desired in the form of metal sheet.

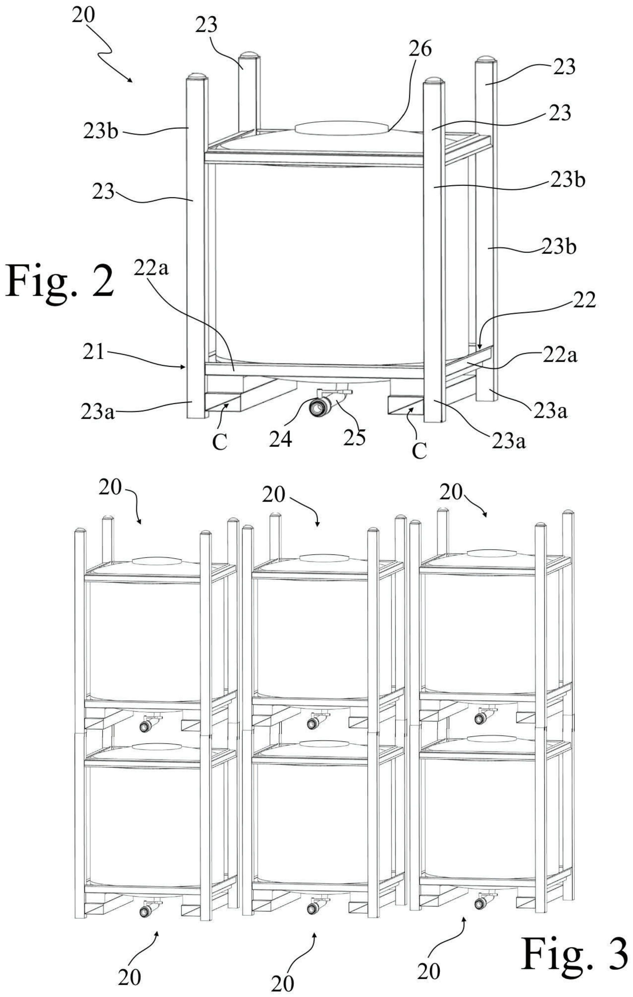

According to the non-limiting embodiment of the ageing tank 20 illustrated in figure 2, the same is made of steel and the internal surface, or the surface configured, during use, to come into contact with the sparkling wine, is mirror-polished so as to achieve roughness Ra values typically below 0.05 µm.

In particular, the internal surface, or the surface configured, during use, to come into contact with the sparkling wine, may be enamelled, for example by heat, and/or coated with a resin, for example an epoxy resin, suitable for food contact, optionally after sandblasting so as to facilitate the subsequent application of the enamel and/or resin.

In other words, the ageing tanks 20 may comprise a layer of enamel and/or resin suitable for food contact applied to their respective internal surface, or surface intended to come into contact in use with the sparkling wine.

In this regard, the walls of the ageing tanks 20 may have a thickness between about 2 and about 5 mm, for example about 2.5 mm.

From a production point of view, the ageing tanks 20 may be made by molding, optionally cold molding, for example in the case of steel construction, or by casting, for example in the case of cast iron construction.

Optionally, the external surface, or the surface configured, during use, to come into contact with the external environment, may be coated with a layer of thermally insulating material, for example expanded polyurethane, so as to mitigate possible thermal shocks.

Advantageously, the ageing tanks 20 comprise an internal rotor or an external rotation system designed to gently rotate the sparkling wine or the ageing tank 20, i.e., simulate a *remuage* essentially to homogenize the sparkling wine contained in the ageing tanks 20.

Preferably, the ageing tanks 20 are equipped with a palletizing structure 21 configured to support a respective ageing tank 20 from below and allow it to be stacked vertically on top of another ageing tank 20, for example upright or even upside down by 180°.

According to the non-limiting embodiment of the ageing tank 20 illustrated in figure 2, the palletizing structure 21 comprises a support base 22 configured to support the ageing tank 20 from below and stacking guides or profiles 23 configured to allow another storage tank 20 to be positioned above it.

Optionally, the palletization structure 21 may be made of steel, for example galvanized, optionally hot-dip galvanized.

The support base 22 may comprise crossbars 22a, preferably L-shaped, associated with each other, for example welded or bolted, so as to form a support frame on which the ageing tank 20 is then placed.

The stacking guides or profiles 23 may comprise or consist of a plurality of tubular uprights 23, optionally arranged, for example welded or bolted, at the corners of the support base 22, so as to enclose the ageing tank 20 between them.

Preferably, the stacking guides or profiles 23 extend perpendicularly to the support base 22 so as to exceed the height of the ageing tank 20.

Advantageously, each tubular upright 23 may comprise a first portion 23a, which extends below the main lying plane of the support base 22 and thus serves as a foot of the palletization structure 21, and a second portion 23b, for example consecutive to the first portion 23a, which extends above the main lying plane of the support base 22.

Preferably, each tubular upright 23 is hollow or, at its lower, in use, end and optionally also at its upper, in use, end, has a recess configured to allow the stacking of one ageing tank 20 on another ageing tank 20.

Advantageously, the palletization structure 21 comprises or defines channels or openings C configured to be engaged by the forks of a forklift or of a pallet truck for the movement of a respective ageing tank 20. Such channels or openings C may be included in or delimited below the support base 22 and, optionally, also above it to allow inverted stacking.

Optionally, the palletization structure 21 may also comprise lifting hooks (not illustrated in the example of figure 2) for the movement of the ageing tanks 20, for example by means of a rail-mounted winch or useful when the filling of the ageing tank 20 occurs by weighing on a scale.

According to the non-limiting embodiment of the ageing tank illustrated in figure 2, it comprises at least one discharge and/or filling valve 24, optionally associated with a discharge and/or filling tap 25, as well as an upper blind flange 26 that closes, for example by bolting to the ageing tank 20 itself, a service opening configured to allow easy access for cleaning the ageing tank 20.

The discharge and/or filling valve 24 may be used both to fill the ageing tank 20 and to empty it, for example by means of isobaric decanting into an autoclave for finishing or for direct bottling.

In an alternative version of the ageing tank 20, the latter may comprise at least one filling valve and at least one discharge valve separate from the at least one filling valve.

Optionally, the ageing tank 20 may also comprise a sampling tap (not illustrated in the figures) useful for taking samples for subsequent testing and/or laboratory checks.

Each ageing tank 20 may also be provided with an identification plate useful for its traceability and handling.

Each ageing tank 20 may also comprise suitable sensors for monitoring the sparkling wine, for example at least one temperature sensor and at least one pressure sensor.

In figure 3, a non-limiting embodiment of several ageing tanks 20 stacked vertically is visible. Clearly, a greater number of ageing tanks 20 stacked one on top of the other could also be provided, for example on three or more levels. Such a group of ageing tanks 20 may advantageously be stored in a storage room at a temperature between 8°C and 15°C, for example between 10°C and 12°C, and preferably free from vibrations.

As can be understood, the step of isobaric decanting 7 allows the autoclave to be "freed" from the sparkling wine so that it can be used, for example, for other or further productions, while at the same time using simple, low-cost, and high-capacity ageing tanks 20 for carrying out aging on the lees or *sur lies,* in order to maintain a production that is industrially, i.e., from the point of view of the number of final bottles produced, high.

The method according to the present invention then comprises a step of waiting 8 for the lysis of the yeasts, i.e., *sur lies* ageing or autolysis, of the sparkling wine in the ageing tanks 20 to obtain an aged sparkling wine.

The duration of the *sur lies* ageing may vary from a minimum of a few months, for example 9 months, up to several years, for example 2, 3, 5 or more years, depending on regulations, style, and/or the decisions of the producer.

In general, *sur lies* ageing, in addition to contributing to the development of complex aromas and increasing the structure and body of the sparkling wine, helps to stabilize it and may contribute to the prolongation of its longevity.

The main factors that may influence the *sur lies* ageing or autolysis of the yeasts may be extrinsic, such as pH, temperature, and/or the presence of ethanol, and intrinsic, such as the nature of the yeast strain.

The method then comprises a step of removal 9 of the lees and/or sediments and/or solid residues of the yeasts from the aged sparkling wine and finally a step of isobaric bottling 10 of such aged sparkling wine.

With reference to the step of removal 9 of the lees and/or sediments and/or solid residues of the yeasts from the aged sparkling wine, it preferably comprises at least one step of centrifugation of the aged sparkling wine to separate the lees and/or sediments and/or solid residues of the yeasts from it. In this regard, centrifugation allows clarification of the aged sparkling wine while preserving the effects of ageing on the yeasts or *sur lies.*

It should be noted that the step of removal 9 may take place directly in the ageing tanks 20 or, preferably, in a finishing autoclave, and in this case, a step of isobaric decanting the aged sparkling wine contained within the ageing tanks 20 into the autoclave, such as for example a finishing autoclave, is provided before the step of removal 9. In such a finishing autoclave, all finishing operations and the relevant oenological controls may be carried out.

Still preferably, the step of removal 9 does not comprise any step of sterile filtration of the aged sparkling wine (typical, instead, of the Martinotti Method), which would eliminate or, at least, mitigate the beneficial effects, from an organoleptic point of view, of ageing on the yeasts or *sur lies.* The exclusion of the sterile filtration step from the step of removal 9 is made possible by the fact that the malolactic bacterial flora and the yeasts of the refermentation or second fermentation of the sparkling wine have already been inactivated and, in any case, in the finishing autoclave or in the ageing tanks 20, it is possible to verify, through physical, chemical, microbiological, and/or organoleptic checks, the production safety of the aged sparkling wine. If desired, before or after the at least one centrifugation step, the method may comprise one or more finishing and/or control steps in which the oenologist may perform, inside the ageing tanks 20 or in the autoclave, for example in the finishing autoclave, if at least one step of isobaric decanting into the autoclave the aged sparkling wine contained within the ageing tanks 20 has been provided, all necessary adjustments to the aged sparkling wine and/or verify its integrity and/or aromatic safety.

Optionally, after the step of waiting 8 for the lysis of the yeasts, the method may comprise a step of homogenizing *remuage,* carried out for example by specific mechanical equipment provided directly in the ageing tank 20, for example by an external rotor or an agitation system. Such homogenizing *remuage,* if provided, allows, especially in the first months, a rapid and substantial lysis of the yeasts.

With reference to the isobaric bottling step 10, it clearly also comprises the application of a respective cap, for example a cork stopper, to the bottles. The bottles used may have the most diverse shapes, making it possible to use bottles with a shape not suitable for placement in the crates typically used for ageing on the lees in the Classic Method.

Optionally, after the isobaric bottling step 10, a step of packaging or dressing the bottles may be provided to prepare them for possible sale and/or shipment.

The method of sparkling wine production according to the present invention allows storing large quantities of sparkling wine from the best vintages for ageing on the lees or *sur lies* for a long time, at decidedly competitive costs. It is also possible for the producer to use any type of bottle for the final bottling.

Moreover, the malolactic fermentation can be controlled or, rather, easily prevented after the refermentation of the base wine directly in the autoclave, so that the lysis of the yeasts can take place in the ageing tanks 20 under conditions of absolute operational safety, since from such ageing tanks 20 the sparkling wine oenologist can take samples and carry out quality checks on the sparkling wine at any time. Essentially, it is possible to have a preventive oenological control in the autoclave where the refermentation or second fermentation occurs, and a final oenological control, optionally after the isobaric decanting of the aged sparkling wine from the ageing tanks 20 to the finishing autoclave, of the malolactic bacteria, reducing to asymptotic values the risk of malolactic fermentation during and after the refermentation or second fermentation.

It has thus been seen how the invention fully achieves the intended objects.

Modifications and variants of the invention are possible within the scope of protection defined by the claims.

## Claims

1. Method (1) for producing sparkling wine, comprising the steps of:
- preparing and/or supplying (2) a base wine,
- decanting (3) said base wine into an autoclave,
- adding (4) a mixture of sugar and yeasts to said base wine to trigger the refermentation, i.e., the second fermentation, of said base wine in said autoclave,
- waiting (5) for the end of the refermentation of said base wine to obtain a sparkling wine,
- devitalising and/or inactivating (6), in said autoclave, the malolactic bacterial flora and the still live yeasts of the refermentation or second fermentation of said sparkling wine,
- isobarically decanting (7) said sparkling wine with the yeasts of the refermentation or second fermentation and with the devitalised and/or inactivated malolactic bacterial flora into ageing tanks (20) having a capacity greater than or equal to 100 litres and provided with an internal surface or surface configured, during use, to come into contact with the sparkling wine having a roughness Ra less than or equal to 0.8 µm,
- waiting (8), for the lysis of the yeasts, i.e., the sur lies ageing, of said sparkling wine in said ageing tanks (20) to obtain an aged sparkling wine,
- removing (9) the lees and/or sediments and/or solid residues of the yeasts from and/or in said aged sparkling wine, and
- isobarically bottling (10) said aged sparkling wine.

2. Method according to the preceding claim, wherein said devitalizing and/or inactivating step (6) occurs by applying and maintaining, in said autoclave, a thermal stress or shock to said sparkling wine for a given period of time or by adding a given quantity of at least one antimicrobial or bactericidal agent to said sparkling wine.

3. Method according to the preceding claim, wherein said devitalizing and/or inactivating step (6) comprises the introduction of one or more successive quantities of sulfur dioxide.

4. Method according to the preceding claim, wherein said quantity of sulphur dioxide is comprised between 15 mg/L and 35 mg/L.

5. Method according to any one of claims 2 to 4, wherein said thermal shock or stress comprises or consists of heating said sparkling wine to a temperature greater than 35°C.

6. Method according to any one of the preceding claims, wherein said step of removing (9) the lees and/or sediments and/or solid yeast residues comprises at least one step of centrifuging said aged sparkling wine to separate the lees and/or sediments and/or solid residues of the yeasts from the latter.

7. Method according to any one of the preceding claims, comprising after said waiting step (8) and before said removal step (9), at least one step of isobaric re-decanting said aged sparkling wine contained within said ageing tanks (20) in the autoclave.

8. Method according to any one of the preceding claims, wherein said ageing tanks (20) are provided with a palletizing structure (21) configured to support a respective ageing tank (20) from below and allow it to be stacked vertically on another ageing tank (20).

9. Method according to the preceding claim, wherein said palletizing structure (21) comprises or defines channels or openings (C) configured to be engaged by the forks of a forklift or of a pallet truck for the movement of a respective ageing tank (20).

10. Method according to claim 8 or 9, wherein said palletizing structure (21) comprises a support base (22) configured to support said ageing tank (20) from below and stacking guides or profiles (23) configured to allow the positioning of another storage tank (20) above it.

11. Method according to any one of the preceding claims, wherein said internal surface or surface configured, during use, to come into contact with the sparkling wine has a roughness Ra less than or equal to 0.05 µm and/or said ageing tanks (20) have a capacity greater than or equal to 380 litres.

12. Method according to the preceding claim, wherein said refining tanks (20) are made of steel and said internal surface or surface configured, during use, to come into contact with the sparkling wine is mirror polished.
